# EUROPÄISCHE PATENTANMELDUNG

(11) **EP 2 660 525 A2**
(43) Veröffentlichungstag der Anmeldung: **06.11.2013**
(21) Anmeldenummer: 13154524.6
(22) Anmeldetag: 08.02.2013
(51) Int. Cl.: F24F 5/00, F24F 7/013

(54) **Belüftungsvorrichtung**

(30) Priorität: 27.03.2012 DE 102012204865
(71) Anmelder: Öko-Haustechnik in VENTer GmbH, 07751 Löberschütz (DE)
(72) Erfinder: Moser, Peter, 07751 Löberschütz (DE)
(74) Vertreter: Geyer, Fehners & Partner

(57) **Zusammenfassung**

Die Erfindung betrifft eine Belüftungsvorrichtung zum Heizen. Kühlen und Entfeuchten von Zu- und Abluft eines Raumes. Eine solche Belüftungsvorrichtung umfasst einen Luftkanal (1) zur Verbindung einer Innenseite des Raumes mit einer äußeren Umgebung. Sie umfasst außerdem mindestens einen in dem Luftkanal (1) angeordneten Axialventilator (6), der in mindestens zwei Betriebszuständen mit entgegengesetzten Luftförderrichtungen zur Förderung von Zuluft von der äußeren Umgebung zur Innenseite des Raumes und zur Förderung von Abluft von der Innenseite des Raumes zur äußeren Umgebung betreibbar ist. Außerdem umfasst die Belüftungsvorrichtung mindestens einen in dem Luftkanal (1) zwischen dem mindestens einen Axialventilator (6) und der äußeren Umgebung angeordneten Wärmespeicher (7) und mindestens ein zwischen dem mindestens einen Axialventilator (6) und der Innenseite des Raumes angeordnetes Temperierelement mit einem ersten Temperierkörper (8) und einem zweiten Temperierkörper (9), wobei beide Temperierkörper miteinander über ein Peltierelement (10) verbunden sind. Schließlich umfasst die Belüftungsvorrichtung auch eine Längsteilung (11), die mindestens einen Bereich des Luftkanals (1) in einen Längsabschnitt mit dem mindestens einen Temperierelement in einen ersten und einen zweiten Strömungskanal aufteilt, so dass sich ein erster Teil des mindestens einen Temperierelements mit dem ersten Temperierkörper (8) im ersten Strömungskanal (12) und ein zweiter Teil des mindestens einen Temperierelements mit dem zweiten Temperierkörper (9) im zweiten Strömungskanal (13) befindet.

## Beschreibung

### Gebiet der Erfindung

Die Erfindung betrifft eine Belüftungsvorrichtung zum Heizen, Kühlen und Entfeuchten von Zu- und Abluft eines Raumes.

### Stand der Technik

Moderne Niedrigenergiehäuser werden gegenüber der Umgebung so stark abgedichtet gebaut, das ein Luftaustausch mit der Umgebung im wesentlichen unterbunden wird und die natürliche Infiltration in solchen Gebäuden nicht ausreicht, die durch die Anwesenheit von Menschen und ggf. auch durch große Temperaturdifferenzen zwischen dem Inneren des Gebäudes und der Umgebung bedingt entstehende Feuchtigkeit zu beseitigen. In Niedrigenergiehäuser werden dabei Lüftungssysteme eingebaut, die über eine Möglichkeit zur Wärmerückgewinnung verfügen. In wärmeren Ländern funktioniert diese Wärmerückgewinnung im Sommer als sogenannte passive Kühlung: Warme, feuchte Luft von außen wird mit der gekühlten Abluft aus dem Inneren gekühlt. Dabei kommt es zur Kondensation im Wärmetauscher, was zu Feuchtigkeitsproblemen sowohl im Rohrnetz als auch in den Wohnbereichen führt. Bei großen, zentral betriebenen Lüftungssystemen wird daher die Zuluft zusätzlich entfeuchtet, bevor sie im Gebäude verteilt wird. Dieser Aufwand lohnt sich jedoch nur bei zentralen Lüftungssystemen. Bei dezentralen Lüftungssystemen gibt es derzeit nur die Möglichkeit, eindringende Feuchtigkeit mittels der Klimaanlage zu beseitigen oder aber einen Entfeuchter aufzustellen. Aber auch bei zentralen Systemen können Probleme auftreten: Da die Zuluft, d.h. die von außen zugeführte Frischluft mit Kondenswasser versetzt ist, kann es in Kombination mit Schmutz zur Kontaminierung des Wärmetauschers kommen. Zentrale Systeme müssen daher ständig gewartet, gereinigt und chemisch desinfiziert werden.

Während in wärmeren Regionen bzw. in heißen Sommern das Auftreten von Kondensat zu Problemen führt, besteht in kälteren Regionen bzw. in Wintern bei starkem Frost die Gefahr des Einfrierens des Wärmespeichers, der auch als Wärmetauscher fungiert. Hier behilft man sich beispielsweise durch elektrische Beheizung des Wärmetauschers oder durch zusätzliche, wasserführende Wärmetauscher, wobei das Wasser in diesen zusätzlichen Wärmetauschern ebenfalls erwärmt sein kann.

Im Stand der Technik sind verschiedene Systeme bekannt, die dem Heizen, Kühlen und ggf. auch der Entfeuchtung dienen. So wird beispielsweise in DE 41 04 423 C2 eine Entlüftungs-und Belüftungsanlage beschrieben, die mit einem Wärmespeicher zur Rückgewinnung der Wärme aus der Abluft beheizter Räume ausgestattet ist. Dabei werden mehrere Wärmespeicher seriell hintereinander geschaltet, zwischen zwei Wärmespeichern befindet sich jeweils ein Luftabstand, der das Ableiten von Wärme unterbinden soll. Ein Ventilator mit umkehrbarer Drehrichtung sorgt dafür, dass abwechselnd Ab- und Frischluft zwischen den Speicherelementen strömen.

In der KR 10 2005 00 38 256 A wird ein Gerät zum Heizen und Kühlen von Luft und kombinierter Entfeuchtung beschrieben. Das Gerät verfügt u.a. über zwei Peltierelemente mit daran angeschlossenen Kühlkörpern, wobei sich zwischen den Kühlkörpern ein Ventilator befindet. Auf der anderen Seite sind die Peltierelemente jeweils mit Wärmeableitplatten versehen. Kühlkörper, Peltierelemente und Wärmeleitplatten sind alle entlang einer Achse in Reihe angeordnet, wobei die Achse zur Drehachse des Ventilators korrespondiert.

In der JP 02-251 021 A wird die Verwendung eines Peltierelements in einer Fußbodenheizung beschrieben, wobei zwei unterschiedliche Wärmespeichermedien unter Ausnutzung von Nachtstrom verwendet werden.

In der DE 10 2005 013 926 A1 wird die Verwendung eines Peltierelements, an das ein Wärmetauscher gekoppelt ist, zur Kühlung, Beheizung oder Temperierung eines sogenannten Anwendungstools, insbesondere im Wellness- oder Medizinbereich, beschrieben.
In der DE 196 00 470 C2 wird ein Thermokompaktgerät in H-Form zur Erwärmung, Kühlung und Entfeuchtung von Medien und zur Wärmerückgewinnung beschrieben. Das Gerät verfügt über zwei getrennte Kanalsysteme, die immer in der gleichen Richtung durchströmt werden. Eine Anzahl von über Peltierelemente heiz- und kühlbaren Thermoblöcken sind bei diesem Gerät parallel geschaltet, das Gerät macht sich die unterschiedlichen Temperaturen in den beiden Kanalsystemen zu Nutze. Kondensiertes Wasser, welches bei der Entfeuchtung anfällt, wird durch eine gewollte Schieflage des Geräts abgeleitet.

In der DE 10 2007 013 779 A1 wird ebenfalls eine Vorrichtung zum Kühlen oder Heizen von Luft beschrieben, welche ebenfalls über einen Wärmespeicher, der auch die Funktion eines Kühlelements übernimmt, verfügt, der seinerseits auch mit einem Peltierelement gekoppelt ist. Dem Wärmespeicher wird im Betrieb entweder Wärme entzogen oder zugeführt, wobei bei der Kühlung der Raumluft kein Austausch mit Außenluft stattfindet. Bei der Verwendung von mehreren mit Peltierelementen verbundenen Wärmespeichern werden diese parallel geschaltet, um die Kapazität der Anlage zu erhöhen.

### Beschreibung der Erfindung

Der Erfindung liegt die Aufgabe zugrunde, eine dezentrale Belüftungsvorrichtung der eingangs beschriebenen Art so weiterzuentwickeln, dass ein Einsatz des Belüftungssystems auch in Gebieten mit großen Temperaturschwankungen, sowie in Gebieten mit gegenüber dem mitteleuropäischen Klimaregime stark erhöhten bzw. stark erniedrigten Temperaturen mit möglichst geringem Wartungsaufwand komplikationsfrei möglich wird.

Eine Belüftungsvorrichtung zum Heizen, Kühlen und Entfeuchten von Zu- und Abluft eines Raumes, die diese Aufgabe löst, umfasst zunächst einen Luftkanal zur Verbindung einer Innenseite des Raumes mit einer äußeren Umgebung. Die äußere Umgebung entspricht meist der Außenseite des Gebäudes, in dem sich der Raum befindet, mit den damit zusammenhängenden klimatischen Bedingungen. Es kann sich bei der äußeren Umgebung aber auch um einen benachbarten Raum im selben Gebäude handeln. Im Luftkanal sind verschiedene Elemente angeordnet, welche die Belüftungsvorrichtung vervollständigen.

Zunächst ist in dem Luftkanal mindestens ein Axialventilator angeordnet, der in mindestens zwei Betriebszuständen betreibbar ist, wobei die Luftförderrichtungen in den beiden Betriebszuständen einander entgegengesetzt sind. Im einen Betriebszustand wird Zuluft von der äußeren Umgebung zur Innenseite des Raumes gefördert, im anderen der mindestens zwei Betriebszustände des Axialventilators wird Abluft von der Innenseite des Raumes zur äußeren Umgebung gefördert. Verschiedene Betriebszustände können sich außerdem durch verschiedene Drehzahlen unterscheiden.

Zwischen dem mindestens einem Axialventilator und der äußeren Umgebung ist in dem Luftkanal mindestens ein Wärmespeicher angeordnet. Wird dieser mit Luft durchströmt, nimmt er bei konstantem Strom die Temperatur der Luft an. Wird beispielsweise von außen kühlere Luft eingesogen, kühlt sich der Wärmespeicher ab. Wird anschließend von innen wärmere Luft nach draußen geblasen, so kühlt der Wärmespeicher diese Luft ab, erwärmt sich jedoch gleichzeitig. Bei abermaliger Umkehr der Strömungsrichtung wirkt der Wärmespeicher dann wie ein Wärmetauscher, erwärmt die eingesogene Luft und kühlt sich dabei selbst ab. Gut geeignet sind beispielsweise keramische Wärmespeicher, die neben einer hohen Wärmekapazität auch resistent gegen Keimbildung sind, sofern sie nicht dauerhaft Feuchtigkeit ausgesetzt sind und in regelmäßigen Intervallen durch Erwärmen getrocknet werden.

Auf der anderen Seite des mindestens einen Axialventilators ist zwischen diesem und der Innenseite des Raumes mindestens ein Temperierelement angeordnet, welches einen ersten und einen zweiten Temperierkörper umfasst. Beide Temperierkörper sind miteinander über ein Peltierelement verbunden, wobei sich beide Temperierkörper hinsichtlich der Längsrichtung des Luftkanals, in der gleichen Entfernung zur äußeren Umgebung bzw. zur Innenseite angeordnet sind. Beide Temperierkörper sind bei horizontaler Strömungsrichtung also übereinander angeordnet, zwischen ihnen befindet sich das Peltierelement, so dass eine gedachte Verbindungsachse erster Temperierkörper - Peltierelement - zweiter Temperierkörper senkrecht zur Strömungsrichtung bzw. senkrecht zur Längsachse des Luftkanals steht.

Schließlich umfasst die Belüftungsvorrichtung noch eine Längsteilung, die mindestens einen Bereich des Luftkanals in einem Längsabschnitt mit dem mindestens einen Temperierelement in einen ersten und einen zweiten Strömungskanal aufteilt. Der Längsabschnitt mit der Längsteilung umfasst das mindestens eine Temperierelement mindestens teilweise. Er kann dabei einen Endpunkt an dem mindestens einen Temperierelement haben, so dass sich die Längsteilung beispielsweise zwischen dem mindestens einen Temperierelement, dem mindestens einen Axialventilator und der innen liegenden Kante des Wärmespeichers erstreckt, der wiederum selbst in verschiedene, parallel zur Strömungsrichtung liegenden Abschnitte eingeteilt sein kann. Aber auch andere Aufteilungen sind möglich, beispielsweise im Abschnitt zwischen dem mindestens einen Temperierelement und der Innenseite des Raumes, oder zwischen dem mindestens einen Axialventilator und der Innenseite des Raumes. Auch können mehrere, nicht zusammenhängende Bereiche durch die Längsteilung definiert werden.

Die Längseinteilung dient insbesondere der strömungstechnischen Trennung der beiden Temperierkörper des mindestens einen Temperierelements. Sie teilt den mindestens einen Bereich dabei so auf, dass sich ein erster Teil des mindestens einen Temperierelements mit dem ersten Temperierkörper im ersten Strömungskanal und ein zweiter Teil des mindestens einen Temperierelements mit dem zweiten Temperierkörper im zweiten Strömungskanal befindet. Das Peltierelement ist zwischen beiden angeordnet, befindet sich also etwa im Bereich der Längsteilung, welche fest eingebaut oder modular gestaltet sein kann. Durch die Längsteilung sind beide Temperierkörper im Luftkanal strömungstechnisch voneinander weitestgehend getrennt, wenn die Längsteilung an dem mindestens einem Temperierelement endet, oder vollständig voneinander getrennt, wenn der Bereich des Luftkanals in den Längsabschnitt und das mindestens eine Temperierelement dieses vollständig umfasst, die Längsteilung also zu beiden Seiten des Temperierelements fortgesetzt wird.

Die Längsteilung sollte dabei mindestens den Bereich zwischen dem am meisten innen liegenden Wärmespeicher und dem der Außenseite am nächsten liegenden Temperierelement verlaufen und den mindestens einen Axialventilator einschließen, so dass eine effektive Aufteilung in zwei Strömungskanäle erreicht werden kann, wobei in den beiden Strömungskanälen im Betrieb unterschiedliche Temperaturregime anliegen.

Effizienter, wenn auch etwas aufwendiger, ist es, die Belüftungsvorrichtung so auszugestalten, dass die Längsteilung den Luftkanal vollständig aufteilt, der mindestens eine Bereich bzw. der Längsabschnitt also über die volle Länge des Luftkanals geht. In jedem Strömungskanal sind dann jeweils mindestens ein Axialventilator und jeweils mindestens ein Wärmespeicher angeordnet. Die Strömungstechnische Trennung der beiden Temperierkörper des mindestens einen Temperierelements wird auf diese Weise noch besser.

Zur weiteren Effizienzsteigerung sind in einer weiteren bevorzugten Ausgestaltung im Luftkanal mehrere Wärmespeicher, mehrere Temperierelemente, oder mehrere Axialventilatoren hintereinander angeordnet. Alle drei Maßnahmen können auch miteinander beliebig kombiniert werden. Zwischen je zwei Temperierelementen, je zwei Axialventilatoren, bzw. zwischen je zwei Wärmespeichern befindet sich ein Luftabstand, der für eine wärmetechnische Entkopplung der Wärmespeicher und der Temperierelemente sorgt. Durch die wärmetechnische Schaltung der Temperierelemente bzw. der Wärmespeicher in Reihe lassen sich außerdem größere Temperaturbereiche zwischen Innen- und Außenseite überwinden, auch wenn jede einzelne Stufe die Temperatur nur um einen kleineren Wert ändert. Eine solche Reihenschaltung ist insbesondere zur Erzielung einer starken Abkühlung, also in heißen Regionen vorteilhaft.

Insbesondere bei einer vollständigen Aufteilung des Luftkanals durch die Längsteilung in zwei Strömungskanäle ist es vorteilhaft, wenn in mindestens einem der beiden Strömungskanäle mehrere Wärmespeicher und/oder mehrere Axialventilatoren hintereinander angeordnet sind, wobei sich zwischen je zwei Axialventilatoren bzw. zwischen je zwei Wärmespeichern wiederum ein Luftabstand befindet.

Hinsichtlich der Temperierelemente erfolgt die Längsteilung so, dass sich sowohl bei vollständiger Längsaufteilung als auch bei nur teilweiser Längsaufteilung der eine Temperierkörper des mindestens einen Temperierelements in dem einem Strömungskanal und der andere Temperierkörper im anderen Strömungskanal befindet.

In einer besonders bevorzugten Ausgestaltung weist die Belüftungsvorrichtung eine Steuerungs- und Regelungsschaltung auf. Diese Schaltung ist mit mindestens einem Außensensor zur Messung der Feuchtigkeit und der Temperatur in der äußeren Umgebung, mit mindestens einem Innensensor zur Messung der Feuchtigkeit und der Temperatur der Innenseiten des Raumes und mit mindestens einem ersten Strömungskanalsensor zur Messung der Feuchtigkeit und der Temperatur im ersten Strömungskanal verbunden. Mittels der Steuerungs- und Regelungsschaltung ist die Drehrichtung und/oder die Drehdauer und/oder die Drehgeschwindigkeit des mindestens einen Axialventilators einstellbar. Zur Erhöhung des Winddrucks können auch mehrere Axialventilatoren vorgesehen sein. Alternativ zur Steuerung des Axialventilators oder auch in Kombination damit ist die Heiz- bzw. Kühlleistung des ersten und des zweiten Temperierkörpers des mindestens einen Temperierelements in Abhängigkeit von den gemessenen Werten der Sensoren einstellbar. Insbesondere bei einer vollständigen Aufteilung des Luftkanals durch die Längsteilung ist die Steuerungs- und Regelungsschaltung vorteilhaft mit mindestens einem zweiten Strömungskanalsensor zur Messung der Feuchtigkeit und der Temperatur im zweiten Strömungskanal verbunden.

Durch die Sensoren werden die Feuchtigkeit und die Temperatur auf der Innenseite und im Außenbereich bestimmt. Die Regelungsschaltung entscheidet dann, ob entfeuchtet wird, ob gekühlt wird, ob Wärme zurückgewonnen wird, oder ob aktiv geheizt wird. Zur Reduzierung des Stromverbrauchs für das Heizen und Entfeuchten können die Temperierelemente auch strömungstechnisch mit einem Wärmespeicher hintereinander geschaltet werden.

In einer weiteren bevorzugten Ausgestaltung ist mindestens einer der Sensoren zur Messung der Strömungsgeschwindigkeit der Luft ausgelegt, alternativ kann dafür auch ein eigener Sensor vorgesehen sein. Anhand der Strömungsgeschwindigkeit lässt sich beispielsweise das mindestens eine Temperierelement steuern und abschalten, wenn die Strömungsgeschwindigkeit auf Null sinkt.

Die vorangehend beschriebene Belüftungsvorrichtung eignet sich besonders gut für den dezentralen Betrieb, zur Belüftung eines einzigen Raumes, weshalb sie mit der äußeren Umgebung in Kontakt stehen muss. Dabei können mehrere solche dezentralen Belüftungsvorrichtungen hintereinander geschaltet werden, so dass beispielsweise Luft auf der einen Seite eines Gebäudes in dieses als Zuluft gefördert wird, und auf der anderen Seite des Gebäudes durch mehrere Räume hindurch als Abluft an die Umgebung abgegeben wird. Sensoren müssen dann nur in einem der Geräte vorhanden sein.

Die Erfindung betrifft auch ein Verfahren zum Betrieb einer solchen, mit einer Steuerungs-und Regelungsschaltung ausgestatteten Belüftungsvorrichtung. Die Belüftungsvorrichtung kann dabei in vier Betriebsarten betrieben werden.

In einer ersten Betriebsart "Entfeuchten" wird in einem der beiden Strömungskanäle Zuluft gefördert. Der in diesem Strömungskanal befindliche Temperierkörper des mindestens einen Temperierelements kühlt dabei die Zuluft auf eine Temperatur ab, die gleich oder kleiner der Taupunkttemperatur ist. Entstehendes Kondensat wird dabei in die äußere Umgebung abgeleitet, beispielsweise indem die Belüftungsvorrichtung leicht schief mit einer Neigung zur äußeren Umgebung hin in die Wand eingesetzt wird.

In einer zweiten Betriebsart "Kühlen" wird in einem der beiden Strömungskanäle Zuluft gefördert, der in diesem Strömungskanal befindliche Temperierkörper des mindestens einen Temperierelements kühlt die Zuluft dabei auf eine Temperatur oberhalb der Taupunkttemperatur ab. Vorzugsweise wird die Zuluft dabei so weit abgekühlt, dass ihre Luftfeuchtigkeit zwischen 60% und 90%, bevorzugt bei 80% liegt. So wird die bestmögliche Kühlung bei klimatisch angenehmer Luftfeuchtigkeit erreicht.

Insbesondere in der Betriebsart "Entfeuchten" ist es notwendig, die in dem jeweiligen Strömungskanal, beispielsweise in dem unteren der beiden Strömungskanäle entstehende Feuchtigkeit, die nicht abfließt, zu beseitigen, da dies ansonsten in Kombination mit Schmutz zur Verkeimung der Vorrichtung führen kann. Aus diesem Grund wird der in dem die Zuluft fördernde Strömungskanal befindliche Temperierkörper des mindestens einen Temperierelements in einer bevorzugten Ausgestaltung des Verfahrens in vorgegebenen Zeitintervallen mittels des Peltierelements erhitzt, um eine solche Keimbildung zu verhindern. Das Zeitintervall zwischen zwei Erhitzungsvorgängen kann hier beispielsweise sechs Stunden betragen. Das Erhitzen selbst erfolgt über einen Zeitraum von einigen Minuten. Sowohl bei der Betriebsart "Entfeuchten" als auch bei der Betriebsart "Kühlen" ist es möglich, Luft in dem anderen Strömungskanal zur Kühlung des anderen Temperierkörpers, also des beheizten Temperierkörpers des mindestens einen Temperierelements zu verwenden.

In einer dritten Betriebsart "Wärmerückgewinnung", in der die Belüftungsvorrichtung betrieben werden kann, wenn die Außentemperatur niedriger als die Innentemperatur ist, wird das mindestens eine Temperierelement deaktiviert. Die Luftförderrichtungen werden im ersten und im zweiten Strömungskanal einander entgegengesetzt betrieben, sofern eine vollständige Trennung der Kanäle vorliegt und zwei Lüfter vorhanden sind, und in einem vorgegebenen Intervall gewechselt. Bei der Verwendung nur eines Axialventilators wird die Strömungsrichtung ebenfalls in dem vorgegebenen Intervall gewechselt, sie ist jedoch für beide Kanäle dieselbe. Die Temperierelemente arbeiten dann als Wärmespeicher. Durch Vorschaltung von keramischen Regeneratoren lässt sich die Effizienz deutlich erhöhen. Die Strömungsrichtung wird dabei relativ häufig gewechselt, beispielsweise in Abständen von einer Minute.

Das Temperierelement kann auch dann abgeschaltet werden, falls die Strömungsgeschwindigkeit auf Null abfällt. Dies erhöht die Energieeffizienz.

In einer vierten Betriebsart "Heizen" schließlich wird in einem der beiden Strömungskanäle Zuluft gefördert, wobei der in diesem Strömungskanal befindliche Temperierkörper des mindestens einen Temperierelements diese Zuluft auf eine vorgegebene Temperatur erwärmt. In dem anderen der beiden Strömungskanäle wird Abluft durch den anderen Temperierkörper des mindestens einen Temperierelements gekühlt.

Bei sehr starkem Frost, bei Temperaturen von weniger als -20°C kann es am Axialventilator in den beiden Betriebsarten "Wärmerückgewinnung" und "Heizen" ohne Gegenmaßnahmen zu Frostproblemen kommen. In einer besonders bevorzugten Ausgestaltung des Verfahrens ist daher vorgesehen, dass Peltierelement des mindestens einen Temperierelements bei Frost mindestens zeitweise mit Wechselstrom zu betreiben. Beide Temperierkörper und der Axialventilator bzw. bei vollständiger Aufteilung des Luftkanals beide Axialventilatoren werden dadurch frostfrei gehalten.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert.
- Fig. 1: zeigt eine erste Ausgestaltung einer Belüftungsvorrichtung mit teilweiser Längsteilung des Luftkanals und
- Fig. 2: eine zweite Ausgestaltung einer Belüftungsvorrichtung bei der die Längsteilung den Luftkanal vollständig aufteilt.

### Ausführliche Beschreibung der Zeichnungen

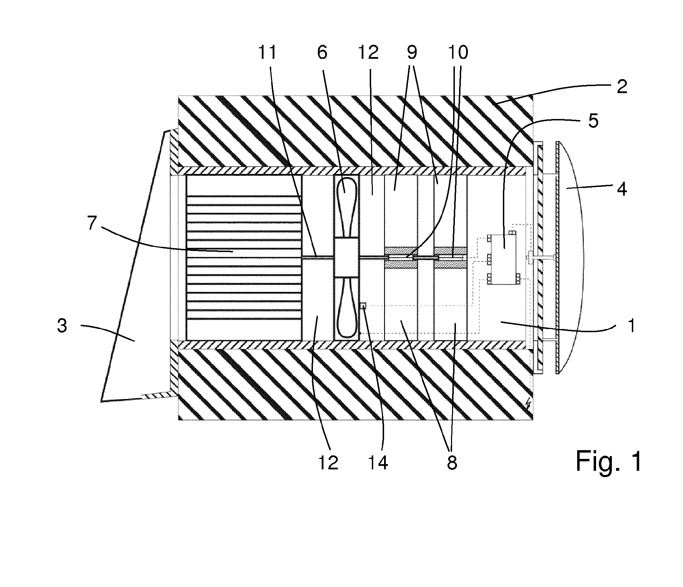

Eine erste Belüftungsvorrichtung zum Heizen, Kühlen und Entfeuchten von Zu- und Abluft eines Raumes ist in Figur 1 dargestellt. Sie umfasst einen Luftkanal 1 zur Verbindung einer Innenseite des Raumes - hier rechts der Belüftungsvorrichtung - mit einer äußeren Umgebung - hier links der Belüftungsvorrichtung. Die Belüftungsvorrichtung ist in einer Wand 2 eingebaut, die den Raum von der äußeren Umgebung trennt. Damit entstehendes Kondenswasser nach außen ablaufen kann, ist die Belüftungsvorrichtung vorzugsweise schräg, mit einem Gefälle nach außen eingebaut. Am außen liegenden Ende des Luftkanals 1 wird die Belüftungsvorrichtung durch eine Außenhaube 3 abgeschlossen. Diese dient insbesondere dem Schutz vor Verschmutzung und vor dem Eindringen größerer Partikel in den Luftkanal 1, welche die Belüftungsvorrichtung beschädigen könnten. An der Innenseite des Raumes verfügt die Belüftungsvorrichtung über einen Deckel 4, der motorisch oder mechanisch entlang der Längsachse des Luftkanals verschiebbar ist. Somit kann der Luftkanal bei Bedarf verschlossen werden. Sofern der Deckel 4 motorisch verschiebbar ist, kann der entsprechende Antrieb für die Verschiebung vorteilhaft mit einer Steuerungs- und Regelungsschaltung 5 verbunden sein, die auch andere Betriebsparameter der Belüftungsvorrichtung regelt und überwacht.

Die Belüftungsvorrichtung umfasst außerdem mindestens einen in dem Luftkanal angeordneten Axialventilator 6. Dieser ist in mindestens zwei Betriebszuständen mit entgegengesetzten Luftförderrichtungen betreibbar. Im einen Betriebszustand dient er der Förderung von Zuluft von der äußeren Umgebung zur Innenseite des Raumes, im zweiten Betriebszustand dient er der Förderung von Abluft von der Innenseite des Raumes zur äußeren Umgebung. Im gezeigten Beispiel ist im Luftkanal 1 genau ein Axialventilator 6 angeordnet, ebenso können aber mehrere Axialventilatoren 6 in Reihe geschaltet werden, oder auch an anderen Stellen im Luftkanal 1 angeordnet werden. Zwischen dem mindestens einen Axialventilator 6 und der äußeren Umgebung ist außerdem im Luftkanal 1 mindestens ein Wärmespeicher 7, beispielsweise ein keramischer Wärmespeicher, wie er auch im Stand der Technik bekannt ist, angeordnet. Auch hier ist im vorliegenden Beispiel nur ein Wärmespeicher 7 gezeigt, es können jedoch auch mehrere Wärmespeicher 7 hintereinander in Reihe geschaltet werden. Zwischen zwei Wärmespeichern 7 kann dann beispielsweise auch jeweils ein zusätzlicher Axialventilator 6 angeordnet sein.

Schließlich umfasst die Belüftungsvorrichtung außerdem mindestens ein zwischen dem mindestens einen Axialventilator 6 und der Innenseite des Raumes angeordnetes Temperierelement. Dieses weist einen ersten Temperierkörper 8 und einen zweiten Temperierkörper 9 auf, wobei beide Temperierkörper 8, 9 miteinander über ein Peltierelement 10 verbunden sind. Wird das Peltierelement 10 von Strom durchflossen, so wird also der eine der beiden Temperierkörper 8, 9 gekühlt, der andere der beiden Temperierkörper 8, 9 beheizt, wobei über die Stromflussrichtung beeinflusst werden kann, welcher der beiden Temperierkörper 8, 9 beheizt und welcher gekühlt wird. Im vorliegenden Beispiel in Fig.1 werden zwei Temperierelemente verwendet, es können jedoch auch mehrere oder nur eines sein. Jedes der Temperierelemente kann außerdem auch mit einem zusätzlichen, bevorzugt keramischen Wärmespeicher 7 in Reihe geschaltet werden. Zwischen zwei Temperierelementen befindet sich dabei jedoch immer ein Luftabstand. Dadurch lässt sich die maximal erzielbare Temperaturdifferenz erhöhen, da mit jedem Temperierelement aufgrund der Beschränkung durch den Peltiereffekt nur eine gewisse Temperaturdifferenz erzielt werden kann, in den mit Luft gefüllten Bereichen keine wesentliche Temperaturänderung stattfindet und auf diese Weise sich so die mit den einzelnen Temperierelementen erzielbaren Temperaturdifferenzen zu einer größeren Gesamttemperaturdifferenz addieren.

Das mindestens eine Temperierelement ist dabei so angeordnet, dass beide Temperierkörper 8, 9 gleichzeitig der Strömung ausgesetzt sind. Bei horizontaler Strömungsrichtung ist also der eine Temperierkörper 8 über dem anderen Temperierkörper 9 angeordnet, dazwischen befindet sich das Peltierelement 10.

Ein wesentlicher Bestandteil der Belüftungsvorrichtung ist eine Längsteilung 11, die mindestens einen Bereich des Luftkanals 1 in einem Längsabschnitt mit dem mindestens einen Temperierelement in einen ersten Strömungskanal 12 und einen zweiten Strömungskanal 13 aufteilt, so dass sich ein erster Teil des mindestens einen Temperierelements mit dem ersten Temperierkörper 8 im ersten Strömungskanal 12 und ein zweiter Teil des mindestens einen Temperierelements mit dem zweiten Temperierkörper 9 im zweiten Strömungskanal 13 befindet. Das mindestens eine Temperierelement ist dabei Teil des betreffenden Längsabschnitts, kann diesen dabei aber auch begrenzen. Die Längsteilung 11 sorgt dafür, dass sich die Luftströme im ersten und zweiten Strömungskanal 12, 13 in dem Bereich, wo die Längsteilung 11 vorgesehen ist, nicht vermischen und somit effektiver auf unterschiedlichen Temperaturen, die bei dem in Figur 1 gezeigten Beispiel durch die unterschiedlichen Temperaturen der Temperierkörper 8, 9 des mindestens einen Temperierelements erzeugt werden, gehalten werden können.

Bei der in Figur 1 gezeigten Belüftungsvorrichtung ist der Luftkanal 1 nur teilweise durch eine Längsteilung 11 in zwei Strömungskanäle 12, 13 aufgeteilt. Ohne weiteres wäre es aber auch möglich, die Längsteilung 11 bis zur Innenseite des Raumes fortzuführen. Beide Strömungskanäle 12, 13 teilen sich einen Axialventilator 6 und einen Wärmespeicher 7.

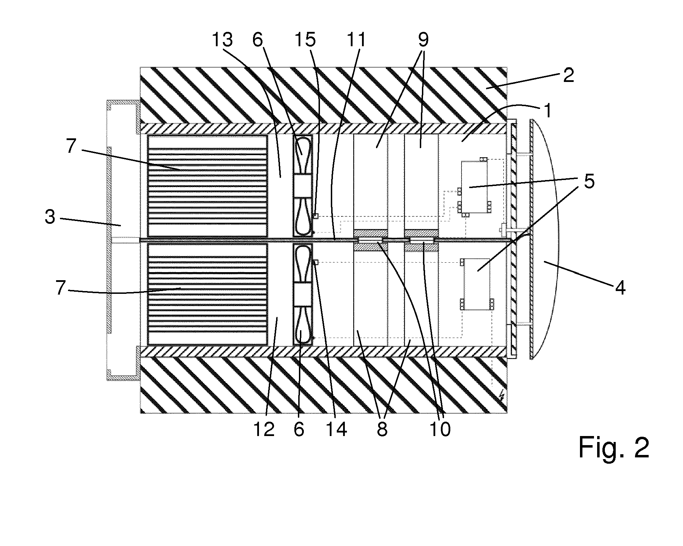

Im Unterschied dazu teilt die Längsteilung 11 bei der in Figur 2 gezeigten Belüftungsvorrichtung den Luftkanal 1 vollständig auf, in jedem Strömungskanal 12, 13 ist jeweils mindestens ein Axialventilator 6 und mindestens ein Wärmespeicher 7 angeordnet. Die Temperierelemente sind wie bei dem in Figur 1 gezeigten Beispiel angeordnet, liegen also in beiden Strömungskanälen, wobei die Temperierkörper 8, 9 jeweils nur einem der beiden Strömungskanäle 12, 13 zugeordnet sind. Bei der in Figur 2 gezeigten Belüftungsvorrichtung sind die beiden Strömungskanäle 12, 13 vollständig voneinander getrennt und nur über das mindestens eine Temperierelement miteinander wärmetechnisch miteinander verbunden. Dies erlaubt einen noch effizienteren Betrieb.

Zur weiteren Effizienzsteigerung können, wie oben schon angedeutet, im Luftkanal 1 jeweils mehrere Wärmespeicher 7 und/oder mehrere Temperierelemente und/oder mehrere Axialventilatoren 6 hintereinander angeordnet sein, wohl sich zwischen je zwei Temperierelementen, zwischen je zwei Axialventilatoren 6, bzw. zwischen je zwei Wärmespeichern 7 ein Luftabstand befindet. Bei einer vollständigen Längsaufteilung des Luftkanals 1 in zwei Strömungskanäle 12, 13 können zur Effizienzsteigerung entsprechend in mindestens einem der beiden Strömungskanäle 12, 13 mehrere Wärmespeicher 7 und/oder mehrere Axialventilatoren 6 hintereinander angeordnet sein, wobei sich zwischen je zwei Axialventilatoren 6 bzw. zwischen je zwei Wärmespeichern 7 ein Luftabstand befindet.

Die Belüftungsvorrichtung kann manuell betrieben werden, bevorzugt wird sie jedoch teil-oder vollautomatisch betrieben. Dazu weist die Belüftungsvorrichtung die oben bereits angesprochene Steuerungs- und Regelungsschaltung 5 auf. Diese ist mit mehreren Sensoren verbunden, u.a. mit einem in den Figuren 1 und 2 nicht gezeigten Außensensor zur Messung der Feuchtigkeit und der Temperatur in der äußeren Umgebung, mit einem ebenfalls nicht gezeigten Innensensor zur Messung der Feuchtigkeit und der Temperatur auf der Innenseite des Raumes, und mit mindestens einem ersten Strömungskanalsensor 14 zur Messung der Feuchtigkeit und der Temperatur im ersten Strömungskanal 12. Anhand der Temperaturdifferenzen zwischen Innen- und Außenseite kann die Steuerungs- und Regelungsschaltung 5 bestimmen, ob die Belüftungsvorrichtung zum Heizen, Kühlen, Entfeuchten oder zur Wärmerückgewinnung betrieben werden soll. Insbesondere der erste Strömungskanalsensor 14 wird zur Bestimmung der Taupunkttemperatur benötigt, die beim Kühlen der Zuluft beim Entfeuchten eine Rolle spielt. Auch kann mittels dieses Sensors festgestellt werden, ob die Temperatur im Strömungskanal 12 oberhalb oder unterhalb des Gefrierpunktes liegt, so dass die Steuerungs- und Regelungsschaltung 5 entsprechende Maßnahmen ergreifen kann, sollte die Temperatur unter den Gefrierpunkt sinken.

Eine wesentliche Aufgabe der Steuerungs- und Regelungsschaltung 5 ist es, die Drehrichtung und/oder die Drehdauer und/oder die Drehgeschwindigkeit des mindestens einen Axialventilators 6 und/oder die Heiz- bzw. Kühlleistung des ersten und des zweiten Temperierkörpers 8, 9 des mindestens einen Temperierelements in Abhängigkeit von den gemessenen Werten der Sensoren einzustellen. Insbesondere bei einer vollständigen Aufteilung des Luftkanals 1 durch die Längsteilung 11 ist es vorteilhaft, wenn die Steuerungs- und Regelungsschaltung 5 mit mindestens einen zweiten Strömungskanalsensor 15 zur Messung der Feuchtigkeit und der Temperatur im zweiten Strömungskanal 13 verbunden ist, wie es in Figur 2 dargestellt ist. Vorteilhaft ist auch mindestens einer der vorangehend erwähnten Sensoren zur Messung der Strömungsgeschwindigkeit der Luft ausgelegt. So kann dann beispielsweise, wenn die Strömungsgeschwindigkeit auf Null absinkt, das Peltierelement 10 des Temperierelements automatisch abgeschaltet werden.

Mittels der Steuerungs- und Regelungsschaltung 5 lassen sich die vorangehend beschriebenen und in Figur 1 und Figur 2 dargestellten Belüftungsvorrichtungen semiautomatisch oder vollautomatisch in mindestens vier verschiedenen Betriebsarten betreiben. Auch ein manueller Betrieb ist allerdings möglich.

In einer ersten Betriebsart "Entfeuchten" wird in einem der beiden Strömungskanäle Zuluft gefördert, wobei die in diesem Strömungskanal befindlichen Temperierkörper der Temperierelemente die Zuluft auf eine Temperatur gleich oder kleiner der Taupunkttemperatur abkühlen. Hierzu eignet sich beispielsweise der untere der beiden Strömungskanäle, in den Figuren als Strömungskanal 12 gekennzeichnet, aufgrund der Tatsache, dass erwärmte Luft bestrebt ist, nach oben zu steigen. Darüber hinaus ist es dann einfacher, entstehendes Kondensat in die äußere Umgebung abzuleiten. Selbstverständlich kann auch der andere der beiden Strömungskanäle, der Strömungskanal 13, für die Förderung von Zuluft verwendet werden. Im anderen Strömungskanal, also beispielsweise im oberen Strömungskanal 13 wird dann Abluft nach außen gefördert und dient der Kühlung der beheizten Temperierkörper 9. Vorteilhaft werden außerdem in der Betriebsart "Entfeuchten" die in dem die Zuluft fördernden Strömungskanal 12 befindlichen Temperierkörper 8 der Temperierelemente in vorgegebenen Zeitintervallen - in der Regel ein Intervall von mehreren Stunden - mittels der Peltierelemente 10 erhitzt. Auf diese Weise kann Keimbildung verhindert werden.

In einer zweiten Betriebsart "Kühlen" wird ebenfalls in einem der beiden Strömungskanäle, vorzugsweise wieder in dem ersten, unten angeordneten Strömungskanal 12 Zuluft gefördert. Die in diesem Strömungskanal 12 befindlichen Temperierkörper 8 der Temperierelemente kühlen die Zuluft dabei aber nur auf eine Temperatur oberhalb der Taupunkttemperatur ab. Die Zuluft wird dabei vorzugsweise auf solche Temperaturen abgekühlt, dass ihre Luftfeuchtigkeit in einen klimatisch angenehmen Bereich, also beispielsweise zwischen 40% und 90%, bevorzugt bei 80% liegt. Die Steuerungs- und Regelungsschaltung 5 entscheidet dabei anhand der Außentemperatur und der Außenfeuchtigkeit, ob diese Betriebart überhaupt eingestellt werden kann. Beispielsweise können die Außentemperatur und die Außenfeuchtigkeit so hoch sein, dass eine Kühlung nur bei gleichzeitiger Entfeuchtung möglich ist. Auch hier kann die Abluft im anderen Strömungskanal, also hier im zweiten Strömungskanal 13, zur Kühlung der anderen Temperierkörper 9 der Temperierelemente verwendet werden.

In einer dritten Betriebsart "Wärmerückgewinnung", die eingestellt werden kann, wenn die Außentemperatur niedriger als die Innentemperatur ist, werden die Temperierelemente deaktiviert, außerdem werden die Strömungsrichtungen in den beiden Strömungskanälen 12, 13 in einem vorgegebenen Intervall gewechselt. Bei vollständiger Längsteilung 11, wie in Figur 2 gezeigt, werden die Luftförderrichtungen im ersten Strömungskanal 12 und im zweiten Strömungskanal 13 außerdem bevorzugt einander entgegengesetzt betrieben. Der Wechsel der Luftförderrichtungen erfolgt dabei durch Umpolen der Lüfter, wobei außerdem verschiedene Drehzahlen für die Förderung von Abluft und für die Förderung von Zuluft eingestellt werden können. In der Regel erfolgt ein solcher Wechsel in einem Intervall zwischen 60 und 140 Sekunden. Die Temperierkörper 8 und 9 der Temperierelemente arbeiten in dieser Betriebsart als Wärmespeicher. Durch Vorschaltung keramischer Regeneratoren direkt vor die Temperierelemente lässt sich der Effekt der Wärmerückgewinnung weiter erhöhen.

In einer vierten Betriebesart "Heizen" wird in einem der beiden Strömungskanäle, also beispielsweise im oberen Strömungskanal 13 Zuluft gefördert. Die in diesem Strömungskanal 13 befindlichen Temperierkörper 9 der Temperierelemente erwärmen diese Zuluft auf eine vorgegebene Temperatur. In dem anderen der beiden Strömungskanäle, hier dem Strömungskanal 12, wird die Abluft durch die anderen Temperierkörper 8 der Temperierelemente gekühlt. Auch hier können die Luftförderrichtungen in den beiden Strömungskanälen, die bei vollständiger Längsteilung 11 bevorzugt einander entgegengesetzt sind, ähnlich wie in der Betriebesart "Wärmerückgewinnung" gewechselt werden, die Belüftungsvorrichtung wird dann im sogenannten Wechselbetrieb betrieben.

Bei Frost, der geeignet ist, den Luftkanal mindestens teilweise einfrieren zu lassen, können die Peltierelemente 10 der Temperierelemente mindestens zeitweise mit Wechselstrom betrieben werden, was sich insbesondere beim Wechselbetrieb anbietet. Auf diese Weise kann das Einfrieren des Luftkanals 1 verhindert werden.

Mit der vorangehend beschriebenen Belüftungsvorrichtung ist es möglich, ein dezentrales Lüftungsgerät zu realisieren, welches über die Funktionen der Wärmerückgewinnung und Entfeuchtung verfügt und auch in wärmeren Regionen betrieben werden kann. Gleichzeitig ist die Belüftungsvorrichtung auch für den Einsatz in Bereichen mit starkem Frost, also in kälteren Regionen geeignet. Kombiniert man die Temperierelemente zusätzlich noch mit vorgeschalteten keramischen Regeneratoren, so wird der Bau von Lüftungssystemen mit hoher Wärmerückgewinnung ohne jegliche klimatische Einschränkung ermöglicht. Die für den Betrieb notwendige Sensortechnik muss dabei nur an einem der Belüftungsgeräte vorhanden sein, da mit ihr über die Regelungs- und Steuerungsschaltung 5 dann beliebig viel andere dezentrale Belüftungsvorrichtungen geregelt werden können.

### Bezugszeichenliste

- 1: Luftkanal
- 2: Wand
- 3: Außenhaube
- 4: Deckel
- 5: Steuerungs- und Regelungsschaltung
- 6: Axialventilator
- 7: Wärmespeicher
- 8: erster Temperierkörper
- 9: zweiter Temperierkörper
- 10: Peltierelement
- 11: Längsteilung
- 12: erster Strömungskanal
- 13: zweiter Strömungskanal
- 14: erster Strömungskanalsensor
- 15: zweiter Strömungskanalsensor

## Patentansprüche

1. Belüftungsvorrichtung zum Heizen. Kühlen und Entfeuchten von Zu- und Abluft eines Raumes, umfassend
- einen Luftkanal (1) zur Verbindung einer Innenseite des Raumes mit einer äußeren Umgebung,
- mindestens einen in dem Luftkanal (1) angeordneten Axialventilator (6), der in mindestens zwei Betriebszuständen mit entgegengesetzten Luftförderrichtungen zur Förderung von Zuluft von der äußeren Umgebung zur Innenseite des Raumes und zur Förderung von Abluft von der Innenseite des Raumes zur äußeren Umgebung betreibbar ist,
- mindestens einen in dem Luftkanal (1) zwischen dem mindestens einen Axialventilator (6) und der äußeren Umgebung angeordneten Wärmespeicher (7),
- mindestens ein zwischen dem mindestens einen Axialventilator (6) und der Innenseite des Raumes angeordnetes Temperierelement mit einem ersten und einem zweiten Temperierkörper (8, 9), wobei beide Temperierkörper (8, 9) miteinander über ein Peltierelement (10) verbunden sind, und
- eine Längsteilung (11), die mindestens einen Bereich des Luftkanals (1) in einem Längsabschnitt mit dem mindestens einen Temperierelement in einen ersten und einen zweiten Strömungskanal (12, 13) aufteilt, so dass sich ein erster Teil des mindestens einen Temperierelements mit dem ersten Temperierkörper (8) im ersten Strömungskanal (12) und ein zweiter Teil des mindestens einen Temperierelements mit dem zweiten Temperierkörper (9) im zweiten Strömungskanal (13) befindet.

2. Belüftungsvorrichtung nach Anspruch 1, **dadurch gekennzeichnet, dass** die Längsteilung (11) den Luftkanal (1) vollständig aufteilt, und in jedem Strömungskanal (12, 13) jeweils mindestens ein Axialventilator (6) und mindestens ein Wärmespeicher (7) angeordnet sind.

3. Belüftungsvorrichtung nach einem der Ansprüche 1 oder 2, **dadurch gekennzeichnet, dass** im Luftkanal (1) mehrere Wärmespeicher (7) und / oder mehrere Temperierelemente und / oder mehrere Axialventilatoren (6) hintereinander angeordnet sind, wobei sich zwischen je zwei Temperierelementen, zwischen je zwei Axialventilatoren (6) bzw. zwischen je zwei Wärmespeichern (7) ein Luftabstand befindet

4. Belüftungsvorrichtung nach einem der Ansprüche 1 bis 3, **dadurch gekennzeichnet, dass** in mindestens einem der beiden Strömungskanäle (12, 13) mehrere Wärmespeicher (7) und / oder mehrere Axialventilatoren (6) hintereinander angeordnet sind, wobei sich zwischen je zwei Axialventilatoren (6) bzw. zwischen je zwei Wärmespeichern (7) ein Luftabstand befindet.

5. Belüftungsvorrichtung nach einem der Ansprüche 1 bis 4, **dadurch gekennzeichnet, dass** sie eine Steuerungs- und Regelungsschaltung (5) aufweist, die
- mit mindestens einem Außensensor zur Messung der Feuchtigkeit und der Temperatur in der äußeren Umgebung,
- mit mindestens einem Innensensor zur Messung der Feuchtigkeit und der Temperatur auf der Innenseite des Raumes, und
- mit mindestens einem ersten Strömungskanalsensor (14) zur Messung der Feuchtigkeit und der Temperatur im ersten Strömungskanal (12) verbunden ist,
- wobei mit der Steuerungs- und Regelungsschaltung (5) die Drehrichtung und / oder die Drehdauer und / oder die Drehgeschwindigkeit des mindestens einen Axialventilators (6) und / oder die Heiz- bzw. Kühlleistung des ersten und des zweiten Temperierkörpers (8, 9) des mindestens einen Temperierelements in Abhängigkeit von den gemessenen Werten der Sensoren einstellbar ist.

6. Belüftungsvorrichtung nach Anspruch 5, **dadurch gekennzeichnet, dass** die Steuerungs- und Regelungsschaltung (5) mit mindestens einem zweiten Strömungskanalsensor (15) zur Messung der Feuchtigkeit und der Temperatur im zweiten Strömungskanal (13) verbunden ist.

7. Belüftungsvorrichtung nach Anspruch 5 oder 6, **dadurch gekennzeichnet, dass** mindestens einer der Sensoren zur Messung der Strömungsgeschwindigkeit der Luft ausgelegt ist.

8. Verfahren zum Betrieb einer Belüftungsvorrichtung nach einem der Ansprüche 5 bis 7, bei dem
- in einer ersten Betriebsart "Entfeuchten" in einem der beiden Strömungskanäle (12) Zuluft gefördert wird, der in diesem Strömungskanal (12) befindliche Temperierkörper (8) des mindestens einen Temperierelements die Zuluft auf eine Temperatur gleich oder kleiner der Taupunkttemperatur abkühlt, und entstehendes Kondensat in die äußere Umgebung abgeleitet wird,
- in einer zweiten Betriebsart "Kühlen" in einem der beiden Strömungskanäle (12) Zuluft gefördert wird, und der in diesem Strömungskanal (12) befindliche Temperierkörper (8) des mindestens einen Temperierelements die Zuluft auf eine Temperatur oberhalb der Taupunkttemperatur abkühlt,
- in einer dritten Betriebsart "Wärmerückgewinnung" bei einer niedrigeren Außen- als Innentemperatur das mindestens eine Temperierelement deaktiviert wird, und die Luftförderrichtungen im ersten und zweiten Strömungskanal (12, 13) in einem vorgegebenen Intervall gewechselt werden, und
- in einer vierten Betriebsart "Heizen" in dem einen der beiden Strömungskanäle (13) Zuluft gefördert wird, der in diesem Strömungskanal (13) befindliche Temperierkörper (9) des mindestens einen Temperierelements die Zuluft auf eine vorgegebene Temperatur erwärmt, und in dem anderen der beiden Strömungskanäle (12) Abluft durch den anderen Temperierkörper (9) des mindestens einen Temperierelements gekühlt wird.

9. Verfahren nach Anspruch 8, **dadurch gekennzeichnet, dass** in der Betriebsart "Entfeuchten" und in der Betriebsart "Kühlen" der in dem die Zuluft fördernden Strömungskanal befindliche Temperierkörper des mindestens einen Temperierelements in vorgegebenen Zeitintervallen mittels des Peltierelements erhitzt wird um Keimbildung zu verhindern, und/oder dass Abluft im anderen Strömungskanal zur Kühlung des anderen Temperierkörpers des mindestens einen Temperierelements verwendet wird.

10. Verfahren nach Anspruch 8 oder 9, **dadurch gekennzeichnet, dass** in der Betriebsart "Kühlen" die Zuluft gekühlt wird, bis ihre Luftfeuchtigkeit zwischen 60% und 90%, bevorzugt bei 80% liegt.

11. Verfahren nach einem der Ansprüche 8 bis 10, sofern rückbezogen auf Anspruch 7,**dadurch gekennzeichnet, dass** das mindestens eine Temperierelement abgeschaltet wird, falls die Strömungsgeschwindigkeit auf Null abfällt.

12. Verfahren nach einem der Ansprüche 8 bis 11, **dadurch gekennzeichnet, dass** das Peltierelement (10) des mindestens einen Temperierelements bei Frost mindestens zeitweise mit Wechselstrom betrieben wird.
